# EUROPEAN PATENT SPECIFICATION

(11) **EP 1 815 746 B1**
(45) Date of publication and mention of the grant of the patent: **06.07.2011**
(21) Application number: 05809701.5
(22) Date of filing: 24.11.2005
(51) Int. Cl.: A23C 9/12

(54) **FERMENTED MILK AND PROCESS FOR PRODUCING THE SAME**
VERGORENE MILCH UND VERFAHREN ZUR HERSTELLUNG DAVON
LAIT FERMENTÉ ET PROCÉDÉ DE SYNTHÈSE DUDIT LAIT

(30) Priority: 25.11.2004 JP 2004340933
(43) Date of publication of application: 08.08.2007
(73) Proprietor: Meiji Dairies Corporation, Tokyo 136-8908 (JP)
(72) Inventor: NOJI, Hisanobu Division Res. & Development, Odawara-shi, Kanagawa 2500862 (JP); FUKUI, Munenori Division Res. & Development, Odawara-shi, Kanagawa 2500862 (JP); KAMIYA, Tetsu Division Res. & Development, Odawara-shi, Kanagawa 2500862 (JP); SASAKI, Hideshi Division Res. & Development, Odawara-shi, Kanagawa 2500862 (JP); ECHIZEN, Hiroshi Division Res. & Development, Odawara-shi, Kanagawa 2500862 (JP)
(74) Representative: Novagraaf Technologies
(86) International application number: PCT/JP2005/021515
(87) International publication number: WO 2006/057265

(56) References cited:
- EP-A- 1 142 481
- WO-A-03/070011
- JP-A- 2002 186 810
- JP-A- 2004 097 051
- JP-A- 2005 318 855
- EDITED BY YAMAUCHI KUNIO, YOKOYAMA KENKICHI.: 'Kabushiki Kaisha Asakura Shoten Hakko, Miruku Sogo Jiten.', 01 May 1998 pages 244 - 245, XP003007766

## Description

### Technical Field

The present invention relates to fermented milk such as yogurt and a process for producing the same.

### Background Art

Fermented milk such as stirred yogurt is produced usually through a process including a step of fermenting a milk base yogurt mix containing at least one member selected from milk, dairy product and milk protein, a step of breaking the resulting fermented milk curds, and a step of cooling them.

The step of breaking the fermented milk curds is the procedure of breaking the structure of yogurt, and is carried out usually by stirring or filtration. Further, raw milk such as cow's milk, dairy products such as powdered skim milk, and milk protein such as milk protein concentrate (MPC), whey protein concentrate (WPC), and whey protein isolate (WPI) are used for production of milk base yogurt mix.

In such stirring and filtration, however, curd particles are not sufficiently pulverized, and you may thus feel gritty texture upon eating. In addition, the surface of the resulting product (for example, stirred yogurt) seems rough in outward appearance, which may not be said to have best qualities. Curd particles when enriched particularly with solids-non-fat (SNF) or protein are hardly pulverized, thus making the curd particles felt significantly gritty upon eating due to insufficient pulverization.

For breaking fermented milk curds to pulverize the curd particles, there is a method of using a homogenizer, and this method is applied to production of drinking yogurt. When a homogenizer is used, curd particles are sufficiently pulverized thus eliminating gritty texture upon eating and roughness in outward appearance, to smooth the texture of yogurt. However, the fermented milk curds are subjected to excessive shear force, thus extremely reducing the viscosity.

When fermented milk curds are broken with a homogenizer to pulverize curd particles in production of fermented milk (e.g. stirred yogurt) requiring shape retention, suitable viscosity and thick texture (rich texture upon eating), the product is poor in thick texture without shape retention. Accordingly, use of a homogenizer is not suitable in a process of producing fermented milk (e.g. stirred yogurt) requiring shape retention, suitable viscosity and thick texture.

Japanese Patent Application Laid-Open (JP-A) No. 7-104 has proposed a method in which gluey fermented milk having suitable viscosity and a creamy texture can be produced by using high-purity whey protein (WPC 85 etc.) as a starting material to form strong curds and then pulverizing the curds with a homogenizer. However, when fermented milk (e.g. stirred yogurt) requiring shape retention, suitable viscosity and thick texture is produced by this method, the resulting fermented milk is poor in viscosity necessary for shape retention and in thick texture. Accordingly, use of a homogenizer is not suitable in the step of breaking fermented milk curds in the process of producing fermented milk (e.g. stirred yogurt) requiring shape retention, suitable viscosity and thick texture. In the method proposed in JP-A No. 7-104 supra, use of high-purity whey protein is essential.

JP-A No. 11-276067 describes a method of producing fermented milk from which water is not separated during storage, which comprises pulverizing, with a homogenizer, a starting material of low fat concentration without adding a stabilizer, followed by fermentation thereof. In this method, however, pulverization is carried out before fermentation in order to attain improvements in physical properties, and there is no description of pulverization of curds formed after fermentation.

WO 03/070011 A relates to a method for producing fermented milk products, wherein at least one casein of the milk is hydrolyzed by means of a coagulating enzyme of the milk, and the product is stirred after fermenting.

JP 2004 097051 A discloses the preparation of a soft type yogurt by providing coolant to the jacket of the fermentation tank which performs gelatinization of the yogurt mix, stopping the fermentation process and stirring the fermentation mix.

### Summary of Invention

In view of the problem of the fermented milk such as stirred yogurt produced through a process including a step of breaking fermented milk curds obtained by fermenting a milk base yogurt mix containing at least one member selected from milk (for example, raw milk such as cow's milk), dairy products (for example, powdered skim milk etc.), and milk protein (for example, milk protein concentrate, whey protein concentrate and whey protein isolate) and a step of cooling the pulverized product and in consideration of the problem of the above process, the object of the present invention is to provide fermented milk (e.g. stirred yogurt) requiring shape retention, suitable viscosity and thick texture (rich texture upon eating) and free of gritty texture upon eating and roughness in outward appearance, as well as a process for producing the same.

In particular, the present invention provides fermented milk (e.g. stirred yogurt) free of gritty texture upon eating and roughness in outward appearance and attaining suitable viscosity, thick texture (rich texture upon eating) with clear-cut aftertaste, and shape retention without adding any stabilizer, thus making it free of powdery texture attributable to a stabilizer, as well as a process for producing the same.

To solve the problem, the present invention provides a process for producing fermented milk having an average particle diameter of 10 to 20 µm and a viscosity measured by rotating Brookfield viscometer TV-10M at 5°C of 8000 mPa·s or more; a process for producing fermented milk having an average particle diameter of 10 to 20 µm and a viscosity measured by rotating Brookfield viscometer TV-10M at 5°C of 8000 mPa·s or more without adding a stabilizer fermented milk having an average particle diameter of 10 to 20 µm and a viscosity measured by rotating Brookfield viscometer TV-10M at 5°C or more, which is produced by said process; and fermented milk having an average particle diameter of 10 to 20 µm and a viscosity measured by rotating Brookfield viscometer TV-10M at 5°C of 8000 mPa·s or more produced without adding a stabilizer, which is produced by said

Particularly, the present invention proposes a process for producing fermented milk having an average particle diameter of 10 to 20 µm and a viscosity measured by rotating Brookfield viscometer TV -10 M at 05°C of 8000 mPa·s or more or fermented milk having an average particle diameter of 10 to 20 µm and a viscosity measured by rotating Brookfield viscometer TV -10 M at 05°C of 8000 mPa·s or more, without adding a stabilizer which comprises a step of breaking fermented milk curds obtained by fermenting a milk base yogurt mix containing at least one member selected from milk (for example, raw milk such as cow's milk), dairy products (for example, powdered skim milk etc.), and milk protein (for example, milk protein concentrate, whey protein concentrate and whey protein isolate) wherein the step of breaking fermented milk curds involves extruding the fermented milk curds using a milk base yogurt mix having a protein concentration of 5 to 10 % or a milk base yogurt mix having a protein concentration of 5 to 10 % and a solids content of 20 to 30 %, through a plurality of openings having a size of 44 to 10 µm (325 to 1300 meshes) (JIS screen standards), or the step of breaking the fermented milk curds involves extruding the fermented milk curds through thin openings having a nozzle diameter of 400 to 800 µm at a back pressure of 2.0 to 3.0 MPa, as well as fermented milk by the process.

The invention also proposes the process for producing fermented milk having an average particle diameter of 10 to 20 µm and a viscosity measured by rotating Brookfield viscometer TV -10 M at 05°C of 8000 mPa·s or more or fermented milk having an average particle diameter of 10 to 20 µm and a viscosity measured by rotating Brookfield viscometer TV -10 M at 05°C of 8000 mPa·s or more without adding a stabilizer wherein a plurality of openings having a size of 44 to 10 µm (325 to 1300 meshes) (JIS screen standards) are formed into a plurality of slits having a slits width of 10 to 40 µm formed in a filter member, as well as fermented milk produced by the process.

In the present invention, the stabilizer is used generally for the purpose of improving the qualities of a food, and encompasses not only an substance mentioned by application names such as "stabilizer, thickener, gelling agent, glue" in the Food Sanitation Law, but also substances which can be regarded as general foods such as agar and gelatin and can exhibit roles and functions such as stabilization, thickening, gelation and gelatinization.

According to the present invention, there can be provided a process for producing fermented milk having an average particle diameter of 10 to 20 µm and a viscosity measured by rotating Brookfield viscometer TV -10M at 05°C of 8000 mPa·s or more, a process for producing fermented milk having an average particle diameter of 10 to 20 µm and a viscosity measured by rotating Brookfield viscometer TV -10 M at 05°C of 8000 mPa·s or more, without adding a stabilizer fermented milk having an average particle diameter of 10 to 20 µm and a viscosity measured by rotating Brookfield viscometer TV -10 M at 05°C of 8000 mPa·s or more, which is produced by the above princess; and fermented milk having an average particle diameter of 10 to 20 µm and a viscosity measured by rotating Brookfield viscometer TV -10 M at 05°C of 8000 mPa·s or more produced without adding a stabilizer which is produced by the above process.

The average particle diameter of fermented milk such as stirred yogurt has significance in eliminating gritty texture upon eating and roughness in outward appearance, and the degree of viscosity has significance in attaining suitable viscosity and thick texture necessary for fermented milk such as stirred yogurt.

According to a sensory quality evaluation test conducted by the present inventors, the suitable viscosity necessary for fermented milk such as stirred yogurt or the preferable viscosity attaining thick texture was preferably 8000 mPa·s or more, more preferably 8500 mPa·s or more, further more preferably 9000 mPa·s or more.

The average particle diameter required to attain suitable viscosity in the above viscosity range, and thick texture, necessary for fermented milk such as stirred yogurt and for eliminating gritty texture upon eating and roughness in outward appearance was in the range of 10 to 20 µm.

According to the present invention, there can be provided a fermented milk food (for example, stirred yogurt) having an average particle diameter of 10 to 20 µm and a viscosity of 8000 mPa·s or more with very smooth texture upon eating without gritty texture, with beautiful gloss without roughness in outward appearance, and with suitable viscosity and thick texture necessary for fermented milk such as stirred yogurt.

According to the present invention, the fermented milk food (e.g. stirred yogurt) capable of maintaining suitable viscosity and thick texture as described above can be provided particularly as a fermented milk food such as stirred yogurt requiring shape retention and reducing the decrease in viscosity to the minimum although it is produced without adding a stabilizer.

That is, the present invention can provide a smooth fermented milk food (e.g. stirred yogurt) attaining new texture upon eating and new outward appearance by pulverizing curd particles such an extent as to prevent reduction in viscosity and thick texture, as well as a process for producing the same.

### Brief Description of Drawings

Fig. 1 is a graph showing the relationship between the flow rate of fermented milk curds fed and the average particle diameter of fermented milk, where the step of breaking fermented milk curds is conducted by using four filter members having a plurality of formed slits different in slit width.
Fig. 2 is a graph showing the relationship between the flow rate of fermented milk curds fed and the viscosity of fermented milk, where the step of breaking fermented milk curds is conducted by using four filter members having a plurality of formed slits different in width slit.

### Best Mode for Carrying Out the Invention

The process of the present invention and the fermented milk of the present invention are concerned with a process for producing fermented milk having an average particle diameter of 10 to 20 µm and a viscosity measured by rotating Brookfield viscometer TV-10M at 5°C of 8000 mPa·s or more; a process for producing fermented milk having an average particle diameter of 10 to 20 µm and a viscosity measured by rotating Brookfield viscometer TV-10M at 5°C of 8000 mPa·s or more without adding a stabilizer fermented milk having an average particle diameter of 10 to 20 µm and a viscosity of 8000 mPa·s or more, which is produced by the above process; and fermented milk having an average particle diameter of 10 to 20 µm and a viscosity measured by rotating Brookfield viscometer TV-10M at 5°C of 8000 mPa·s or more produced without adding a stabilizer which is produced by the above process

As described above, the suitable viscosity necessary for fermented milk such as stirred yogurt or the viscosity attaining thick texture is preferably 8000 mPa·s or more, and the average particle diameter of fermented milk which is in the above viscosity range and is free of gritty texture upon eating and roughness in outward appearance is in the range of 10 to 20 µm, according to the sensory quality evaluation test conducted by the present inventors, and the present invention can produce and provide fermented milk such as stirred yogurt satisfying such conditions.

Incidentally, as described above, according to the sensory quality evaluation test conducted by the present inventors, the suitable viscosity necessary for fermented milk such as stirred yogurt or the more preferable viscosity attaining thick texture is preferably 8500 mPa·s or more, more preferably 9000 mPa·s or more, and the average particle diameter of fermented milk in such viscosity range is 10 to 20 µm, and by satisfying these conditions, there can be produced and provided fermented milk with very smooth texture upon eating without gritty texture, with beautiful gloss without roughness in outward appearance, and further having suitable viscosity and thick texture necessary for fermented milk such as stirred yogurt.

Accordingly, the fermented milk of the presente invention is produced to have an average particle diameter of 10 to 20 µm and a viscosity measured by rotating Brookfield viscometer TV -10 M at 05°C of 8000 mPa·s or more without adding a stabilizer , or preferably has preferably an average particle diameter of 10 to 20 µm and a viscosity measured by rotating Brookfield viscometer TV-10 M at 05°C of 8000 mPa·s or more or more, and is produced to have an average particle diameter of 10 to 20 µm and a viscosity of 5800 mPa·s or more without adding a stabilizer or more preferably has an average particle diameter of 10 to 20 µm and a viscosity measured by rotating Brookfield viscometer TV -10 M at 05°C of 8000 mPa·s or more, and is more preferably produced to have an average particle diameter of 10 to 20 µm and a viscosity of 9000 mPa·s ore more without adding a stabilizer , and further more preferably has an average particle diameter of 10 to 20 µm and a viscosity measured by rotating Brookfield viscometer TV-10 M at 05°C of 9000 mPa·s or more.

According to the present invention, there can be provided fermented milk such as stirred yogurt, though being produced without adding a stabilizer or by adding a very small amount of a stabilizer, which has an average particle diameter (10 to 20 µm) to eliminate gritty texture upon eating and roughness in outward appearance and has viscosity (8000 mPa·s or more) to allow a fermented milk food such as stirred yogurt requiring shape retention to maintain the suitable viscosity and thick texture.

In the present invention, production of fermented milk such as stirred yogurt having an average particle diameter of 10 to 20 µm and a viscosity measured by rotating Brookfield viscometer TV -10 M at 05°C of 8000 mPa·s or more involves a step of breaking fermented milk curds obtained by fermenting a milk base (yogurt mix) containing at least one member of milk (for example, raw milk such as cow's milk), a dairy product (for example, powdered skim milk etc.), and milk protein (for example, milk protein concentrate, whey protein concentrate, whey protein isolate, etc.) in a step of producing fermented milk, and the step of breaking fermented milk curds is carried out preferably by extruding the fermented milk using a milk base yogurt mix having a protein concentration of 5 to 10% or a milk base yogurt mix having a protein concentration of 5 to 10 % and a solids content of 20 to 30 %, through a plurality of openings having a size of 44 to 10 µm (325 to 1300 meshes) (JIS screen standards) or by jetting the fermented milk curds through thin openings having a nozzle diameter of 400 to 800 µm at a back pressure of 2.0 to 3.0 MPa.

A plurality of the openings having a size of 44 to 10 µm (325 to 1300 meshes) (JIS screen standards) can be formed into a plurality of slits having a slit width of 10 to 40 µm formed in a filter member.

When the step of breaking the fermented milk curds involves jetting through thin openings having a nozzle diameter of 400 to 800 µm at a back pressure of 2.0 to 3.0 MPa, a nozzle body provided with a plurality of thin openings having a nozzle diameter of 400 to 800 µm is used in consideration of production efficiency, and the fermented milk curds are broken preferably by passing them through a plurality of thin openings having a nozzle diameter of 400 to 800 µm in the nozzle body at a back pressure of 2.0 to 3.0 MPa.

The conditions under which the step of breaking fermented milk curds is carried out by extruding the fermented milk curds using a milk base yogurt mix having a protein concentration of 5 to 10% or a milk base yogurt mix having a protein concentration of 5 to 10% and a solids content of 20 to 30%, through a plurality of openings having a size of 44 to 10 µm (325 to 1300 meshes) (JIS screen standards) or the step of breaking the fermented milk curds is carried out by jetting the fermented mil curds through thin openings having a nozzle diameter of 400 to 800 µm at a back pressure of 2.0 to 3.0 MPa, were defined from the viewpoint of stable and sufficiently reproducible production of fermented milk such as stirred yogurt having an average particle of 10 to 20 µm and a viscosity of 8000 mPa·s or more.

The step of producing fermented milk such as stirred yogurt includes a step of breaking the fermented milk curds, where the fermented milk such as stirred yogurt is produced from a milk base yogurt mix having a protein concentration of 5 to 10% or a milk base yogurt mix having a protein concentration of 5 to 10% and a solids content of 20 to 30%, and without using a conventionally used homogenizer, the fermented milk curds are broken by extrusion through a plurality of openings having a size of 44 to 10 µm (325 to 1300)meshes(JIS screen standards) or by jetting through thin openings having a nozzle diameter of 400 to 800 µm at a back pressure of 2.0 to 3.0 MPa, whereby fermented milk such as stirred yogurt having an average particle diameter of 10 to 20 µm and a viscosity of 8000 mPa·s or more with very smooth texture upon eating without gritty texture and with beautiful gloss without roughness in outward appearance and further having the suitable viscosity and thick texture necessary for fermented milk such as stirred yogurt can be produced with good reproducibility.

With respect to the fermented milk such as stirred yogurt produced through a process including a step of breaking fermented milk curds obtained by fermenting a milk base yogurt mix containing at least one member selected from milk (for example, raw milk such as cow's milk), dairy products (for example, powdered skim milk etc.), and milk protein (for example, milk protein concentrate, whey protein concentrate and whey protein isolate) and a step of cooling the pulverized product, the fermented milk curds using a milk base yogurt mix having a protein concentration of 5 to 10% or a milk base yogurt mix having a protein concentration of 5 to 10% and a solids content of 20 to 30% are extruded through a plurality of openings having a size of 44 to 10 µm (325 to 1300 meshes) (JIS screen standards) or jetted through thin openings having a nozzle diameter of 400 to 800 µm at a back pressure of 2.0 to 3.0 MPa thereby achieving the same effect as in straining, whereby fermented milk such as stirred yogurt with very smooth texture upon eating without gritty texture and with beautiful gloss without roughness in outward appearance and further having the suitable viscosity and thick texture necessary for fermented milk such as stirred yogurt can be produced.

In production of the fermented milk curds in the present invention, use of the milk base yogurt mix having a protein concentration of 5 to 10% and a solid content of 20 to 30% is advantageous over use of the milk base yogurt mix having a protein concentration of 5 to 10% and a solids content outside the range of 20 to 30% because fermented milk having thick texture (rich texture upon eating) can be produced.

In the present invention, a plurality of the openings having a size of 44 to 10 µm (325 to 1300 meshes) (JIS screen standards) used in the step of breaking the fermented milk curds are used to extrude the fermented milk curds thereby exhibiting the same effect as in straining, whereby a fermented milk food (for example, stirred yogurt) with very smooth texture upon eating without gritty texture and with beautiful gloss without roughness in outward appearance can be produced. For this purpose, a filter, screen etc. can be used insofar as they have a plurality of openings having a size in the range of 44 to 10 µm (325 to 1300 meshes) (JIS screen standards).

A plurality of the openings having a size of 44 to 10 µm (325 to 1300 meshes) (JIS screen standards) can be formed into a plurality of slits having a slit width of 10 to 40 µm formed in a filter member.

When the step of breaking the fermented milk curds involves extrusion through a plurality of opening having a size of to 44 to 10 µm (325 to 1300 meshes) (JIS screen standards), the standard deviation of the distribution of opening sizes such as the distribution of opening (pore) diameters is advantageously smaller to control the particle diameter of fermented milk after production.

When the step of breaking the fermented milk curds through a plurality of slits having a slit width of 10 to 40 µm formed in a filter member, as a plurality of openings having a size of 44 to 10 µm (325 to 1300) meshes (JIS screen standards), is compared with the step of breaking the fermented milk curds through thin openings having a nozzle diameter of 400 to 800 µm at a back pressure of 2.0 to 3.0 MPa, the former was advantageous in that a fermented milk food (for example, stirred yogurt) capable of maintaining more suitable thick texture while maintaining smooth texture on the tongue can be produced.

Whether a filter member or a nozzle is used, it is desirable for continuous operation and mass treatment that a scraper means for the purpose of preventing clogging in openings be arranged in the vicinity of filter slits and thin openings of the nozzle.

Hereinafter, the present invention is described in more detail by reference to the Examples.

### Example 1

### (Step of fermenting a dairy product and a milk protein-containing milk base (yogurt mix))

1725 g powdered skim milk, 525 g milk protein concentrate (referred to hereinafter as "MPC") and 750 g sugar were dissolved under stirring in 10740 g water at ordinary temperatures. Thereafter, the mixture was heated to 50°C under stirring, and after heating, 810 g salt-free butter was introduced into it. After dissolution, the mixture was heated to 70°C and then subjected to a homogenizer. After homogenization, the mixture was heated to 95°C and then cooled to 43°C.

Then, 3 wt% mixed starter of Lactobacillus bulgaricus and Streptococcus thermophilus isolated from Meiji Bulgaria Fruits Yogurt manufactured by Meiji Dairies Corporation was inoculated onto the mixture and stirred for 5 minutes.

This milk base (yogurt mix) was fermented in the vicinity of 43°C, and when the pH was reduced to 4.7 or less, the fermentation was finished.

The solids content of the milk base yogurt mix was 24.2%, the protein concentration was 7.1%, the fat concentration was 4.7%, and the sugar concentration was 5.0%.

### (Step of breaking the fermented milk curds)

The step of breaking the fermented milk curds thus obtained was carried out as follows.

The fermented milk curds were fluidized and broken with a triangle filter (trade name, manufactured by Arai Machinery Corporation) having a plurality of minute openings in slits having a slit width of 10 µm formed in a filter member.

The size of an opening (slit having a slit width of 10 µm) of the triangle filter (trade name) having a plurality of minute openings in slits having a slit width of 10 µm corresponds to 10 µm (1300 meshes) (JIS screen standards). That is, the step of breaking the fermented milk curds was carried out by using a filter member having a plurality of openings having a size of 10 µm (1300 meshes) (JIS screen standards) formed therein.

The throughput speed (speed of fluidizing the fermented milk curds) consisted of two standards, that is, flow rates of 250 L/h and 570 L/h fermented milk curds through an effective area of 210 cm² of the triangle filter (trade name).

The temperature of the fluidized fermented milk curds was changed with time to become 43 to 35°C.

### (Cooling step)

The fermented milk curds thus broken were rapidly cooled to about 5°C with a heat exchanger such as a tubular cooler. Thereafter, the sample was placed in a predetermined frame and cooled in a refrigerator (3 to 5°C, 12 hours), to give stirred yogurt as the fermented milk of the present invention.

As described above, this fermented milk (stirred yogurt) was produced without adding a stabilizer, and sugar was added to the starting materials.

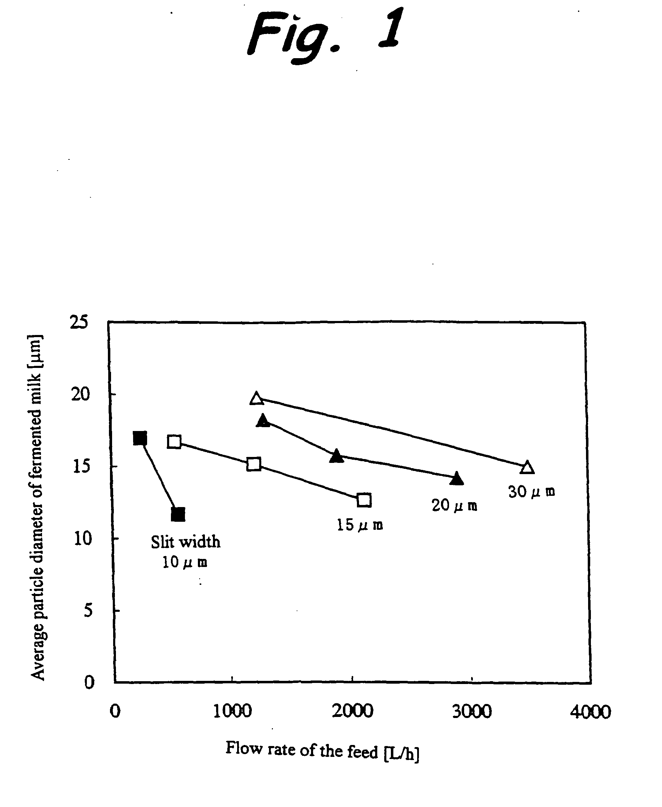

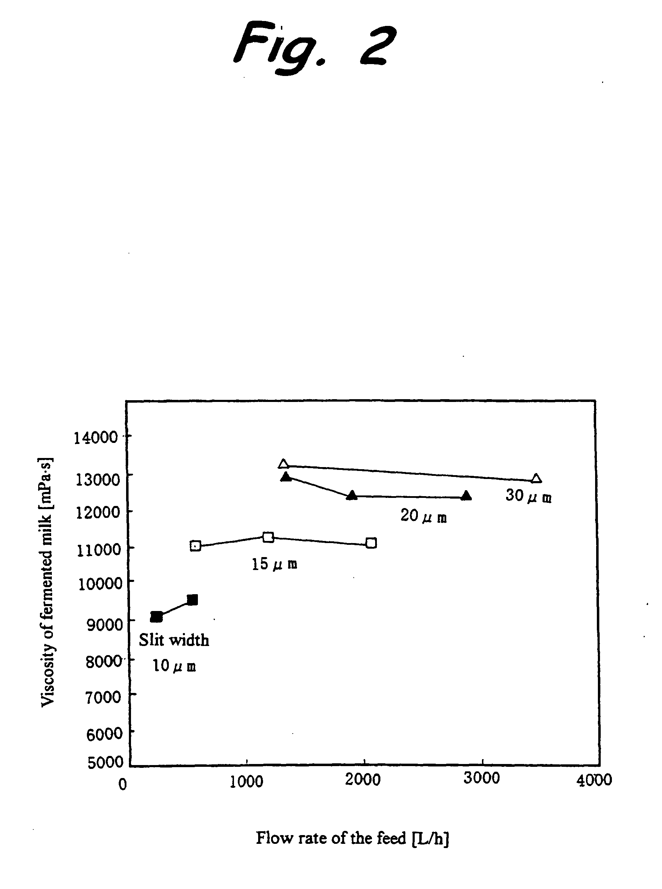

The relationship between the average particle diameter of the produced fermented milk and the flow rate of fermented milk curds fed is shown in Fig. 1, and the relationship between the viscosity of the fermented milk and the flow rate of fermented milk curds fed is shown in Fig. 2.

When the flow rate of the curds fed was 250 L/h, the average particle diameter was 16.9 µm, and when the flow rate of the curds fed was 570 L/h, the average particle diameter was 11.7 µm, thus indicating that the particle diameter was decreased as the flow rate was increased, and in either case, the particle diameter was in the range of 10 to 20 µm.

The viscosity was 9100 mPa·s at a flow rate of 250 L/h, or 9500 mPa·s at 570 L/h. In either case, the viscosity was 8000 mPa·s or more.

Fermented milk having suitably high viscosity, a smooth texture, and a strong thick texture (rich texture upon eating) could be stably obtained by the production process described above.

When the triangle filter (trade name, manufactured by Arai Machinery Corporation) having a plurality of minute openings in slits having a slit width of 10 µm formed in a filter member, used in this example, was compared with a triangle filter (trade name, manufactured by Arai Machinery Corporation) having a plurality of minute openings in slits having slit widths of 15 µm, 20 µm and 30 µm formed in a filter member used later in the Examples, the throughput speed in this example was lightly lower.

A laser scattering particle-size distribution measuring instrument SALD-2100 (Shimadzu Corporation) was used in measurement of particle diameters in the present invention, the Examples and the Comparative Examples. The average particle diameter was a volume-average particle diameter which was determined by suspending a sample in a citrate buffer, and 30 seconds later, measuring it with a standard refractive index of 1.70 to 0.20 L

In evaluation of viscosity in the present invention, the Examples and the Comparative Examples, a sample was measured for viscosity after stirring for 30 seconds at 30 rpm with No. 4 rotor (code M23) in a rotating Brookfield viscometer TV-10M manufactured by Toki Sangyo Co., Ltd.

The sample used in measurement was prepared in each of the Examples and the Comparative Examples and then introduced into a beaker having a diameter of about 50 mm. The sample was measured just after stirring by rotating it 10 times in clockwise and anticlockwise directions respectively with a spatula or the like. The measurement temperature was 5°C. By this method, reproducible results are obtained in measurement of a highly viscous fluid such as fermented milk.

The viscosity in the present invention, the Examples and the Comparative Examples is a value determined by this method. The maximum measurement limit of the rotating Brookfield viscometer used is 20000 mPa·s.

In the step of breaking fermented milk curds by extruding the fermented milk curds through a plurality of openings having a size of 44 to 10 µm (325 to 1300 meshes) (JIS screen standards) in this example, the triangle filter (trade name, manufactured by Arai Machinery Corporation) having a plurality of minute openings in slits having a slit width of 10 µm (mesh number 1300 (JIS screen standards)) formed in a filter member was used as one example of a plurality of openings having a size of 44 to 10 µm (325 to 1300 meshes).

The triangle filter manufactured by Arai Machinery Corporation used also in the following examples is a separator having a filter member provided a plurality of slits having a minute slit width, for example, a slit width of 3 to 300 µm or more, and this slit width corresponds to the pore diameter of a usual filter.

### Example 2

Fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 1 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 2, the size of an opening (slit having a slit width of 15 µm) of the triangle filter (trade name) having a plurality of minute openings in slits having a slit width of 15 µm corresponds to 900 meshes (JIS screen standards). That is, the step of breaking the fermented milk curds obtained in the same manner as in Example 1 was carried out by using a filter member having a plurality of openings having a size of 15 µm (900 meshes) (JIS screen standards) formed therein

The throughput speed (speed of fluidizing the fermented milk curds) consisted of three standards, that is, flow rates of 550 L/h, 1220 L/h and 2120 L/h fermented milk curds through an effective area of 210 cm² of the triangle filter (trade name).

The temperature of the fluidized fermented milk curds was changed with time to become 43 to 35°C.

The relationship between the average particle diameter of the produced fermented milk and the flow rate of fermented milk curds fed is shown in Fig. 1, and the relationship between the viscosity of the fermented milk and the flow rate of fermented milk curds fed is shown in Fig. 2.

When the flow rate of the curds fed was 550 L/h, the average particle diameter was 16.7 µm; when the flow rate of the curds fed was 1220 L/h, the average particle diameter was 15.2 µm; and when the flow rate of the curds fed was 2100 L/h, the average particle diameter was 12.6 µm, thus indicating that the particle diameter was decreased as the flow rate was increased, and in any cases, the particle diameter was in the range of 10 to 20 µm.

The viscosity was 11000 mPa·s at a flow rate of 550 L/h, 11100 mPa·s at a flow rate of 1220 L/h, or 11000 mPa·s at 2100 L/h. In any cases, the viscosity was 8000 mPa·s or more.

Fermented milk having suitably high viscosity, a smooth texture, and a strong thick texture (rich texture upon eating) could be stably obtained by the production process described above.

The fermented milk (stirred yogurt) in Example 2 using the triangle filter (trade name, manufactured by Arai Machinery Corporation) having a plurality of minute openings in slits having a slit width of 15 µm formed in a filter member, as compared with the fermented milk (stirred yogurt) in Example 1 using the triangle filter (trade name, manufactured by Arai Machinery Corporation) having a plurality of minute openings in slits having a slit width of 10 µm formed in a filter member, showed higher viscosity and a higher throughput speed. Regardless of slit width, the two products were similar in respect of the particle diameter of the fermented milk, smooth texture upon eating, etc. Accordingly, it can be said that from the viewpoint of increasing the viscosity of the fermented milk, the thick texture and the throughput speed, the triangle filter (trade name, manufactured by Arai Machinery Corporation) having a plurality of minute openings in slits having a slit width of 15 µm formed in a filter member is superior to the triangle filter (trade name, manufactured by Arai Machinery Corporation) having a plurality of minute openings in slits having a slit width of 10 µm formed in a filter member.

### Example 3

Fermented milk curds (that is, a milk base yogurt mix with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 20 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 3, the size of an opening (slit having a slit width of 20 µm) of the triangle filter (trade name) having a plurality of minute openings in slits having a slit width of 20 µm corresponds to 650 meshes (JIS screen standards). That is, the step of breaking the fermented milk curds obtained in the same manner as in Example 1 was carried out by using a filter member having a plurality of openings having a size of 20 µm (650 meshes) (JIS screen standards) formed therein

The throughput speed (speed of fluidizing the fermented milk curds) consisted of three standards, that is, flow rates of 1300 L/h, 1900 L/h and 2900 L/h fermented milk curds through an effective area of 210 cm² of the triangle filter (trade name).

The temperature of the fluidized fermented milk curds was changed with time to become 43 to 35°C.

The relationship between the average particle diameter of the produced fermented milk and the flow rate of fermented milk curds fed is shown in Fig. 1, and the relationship between the viscosity of the fermented milk and the flow rate of fermented milk curds fed is shown in Fig. 2.

When the flow rate of the curds fed was 1300 L/h, the average particle diameter was 18.2 µm; when the flow rate of the curds fed was 1900 L/h, the average particle diameter was 15.7 µm; and when the flow rate of the curds fed was 2900 L/h, the average particle diameter was 14.2 µm, thus indicating that the particle diameter was decreased as the flow rate was increased, and in any cases, the particle diameter was in the range of 10 to 20 µm.

The viscosity was 12900 mPa·s at a flow rate of 1300 L/h, 12400 mPa·s at a flow rate of 1900 L/h, or 12500 mPa·s at 2900 L/h. In any cases, the viscosity was 8000 mPa·s or more.

Fermented milk having suitably high viscosity, a smooth texture, and a strong thick texture (rich texture upon eating) could be stably obtained by the production process described above.

The fermented milk (stirred yogurt) in Example 3 using the triangle filter (trade name, manufactured by Arai Machinery Corporation) having a plurality of minute openings in slits having a slit width of 20 µm formed in a filter member, as compared with the fermented milk (stirred yogurt) in Example 2 using the triangle filter (trade name, manufactured by Arai Machinery Corporation) having a plurality of minute openings in slits having a slit width of 15 µm formed in a filter member, showed higher viscosity and a higher throughput speed. Regardless of slit width, the two products were similar in respect of the particle diameter of the fermented milk, smooth texture upon eating, etc. Accordingly, it can be said that from the viewpoint of increasing the viscosity of the fermented milk, the thick texture and the throughput speed, the triangle filter (trade name, manufactured by Arai Machinery Corporation) having a plurality of minute openings in slits having a slit width of 10 µm or 15 µm formed in a filter member is superior to the triangle filter (trade name, manufactured by Arai Machinery Corporation) having a plurality of minute openings in slits having a slit width of 20 µm formed in a filter member.

### Example 4

Fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 25 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 8, the size of an opening (slit having a slit width of 25 µm) of the triangle filter (trade name) having a plurality of minute openings in slits having a slit width of 25 µm corresponds to 550 meshes (JIS screen standards). That is, the step of breaking the fermented milk curds obtained in the same manner as in Example 1 was carried out by using a filter member having a plurality of openings having a size of 25 µm (550 meshes) (JIS screen standards) formed therein

The throughput speed (speed of fluidizing the fermented milk curds) was a flow rate of 5000 L/h fermented milk curds through an effective area of 1200 cm² of the triangle filter (trade name). The flow rate of 5000 L/h is the throughput capacity of production level in an actual factory.

The particle diameter was 13.2 µm, which was in the range of 10 to 20 µm.

The viscosity was 17700 mPa·s, which was a viscosity of 8000 mPa·s or more.

Fermented milk having suitably high viscosity, a smooth texture, and a strong thick texture (rich texture upon eating) could be stably obtained by the production process described above.

### Example 5

Fermented milk curds (that is, a milk base yogurt mix with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 30 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 5, the size of an opening (slit having a slit width of 30 µm) of the triangle filter (trade name) having a plurality of minute openings in slits having a slit width of 30 µm corresponds to 450 meshes (JIS screen standards). That is, the step of breaking the fermented milk curds obtained in the same manner as in Example 1 was carried out by using a filter member having a plurality of openings having a size of 450 meshes (JIS screen standards) formed therein.

The throughput speed (speed of fluidizing the fermented milk curds) consisted of two standards, that is, flow rates of 1300 L/h and 3500 L/h fermented milk curds through an effective area of 210 cm² of the triangle filter (trade name).

The temperature of the fluidized fermented milk curds was changed with time to become 43 to 35°C.

The relationship between the average particle diameter of the produced fermented milk and the flow rate of fermented milk curds fed is shown in Fig. 1, and the relationship between the viscosity of the fermented milk and the flow rate of fermented milk curds fed is shown in Fig. 2.

When the flow rate of the curds fed was 1300 L/h, the average particle diameter was 19.8 µm, and when the flow rate of the curds fed was 3500 L/h, the average particle diameter was 15.0 µm, thus indicating that the particle diameter was decreased as the flow rate was increased, and in either case, the particle diameter was in the range of 10 to 20 µm.

The viscosity was 13200 mPa·s at a flow rate of 1300 L/h, or 12900 mPa·s at a flow rate of 3500 L/h. In either case, the viscosity was 8000 mPa·s or more.

Fermented milk having suitably high viscosity, a smooth texture, and a strong thick texture (rich texture upon eating) could be stably obtained by the production process described above.

However, the fermented milk having an average particle diameter of 19.8 µm gave gritty texture on the tongue upon eating.

Other examination made by the present inventors revealed that when the fermented milk having a viscosity of 8000 mPa·s or more has an average particle diameter of 20 µm or more, the product has gritty texture on the tongue upon eating, so it was considered that in the case of fermented milk (for example, stirred yogurt) requiring a viscosity of 8000 mPa·s or more to satisfy suitable viscosity and thick texture, the average particle diameter is preferably not higher than 20 µm.

The fermented milk (stirred yogurt) in Example 5 using the triangle filter (trade name, manufactured by Arai Machinery Corporation) having a plurality of minute openings in slits having a slit width of 30 µm formed in a filter member, as compared with the fermented milks (stirred yogurts) in Examples 1, 2, 3 and 4 using the triangle filters (trade name, manufactured by Arai Machinery Corporation) having a plurality of slits having slit widths of 10, 15, 20 and 25 µm formed in filter members, showed higher viscosity and a higher throughput speed. Regardless of slit width, these products were similar in respect of the particle diameter of the fermented milk, smooth texture upon eating, etc. Accordingly, it can be said that from the viewpoint of increasing the viscosity of the fermented milk, the thick texture and the throughput speed, the triangle filter (trade name, manufactured by Arai Machinery Corporation) having a plurality of minute openings in slits having a larger slit width formed in a filter member is suitable.

In the step of breaking the fermented milk curds obtained from a milk base (yogurt mix) having a solids content of 24.2% and a protein concentration of 7.1% without adding a stabilizer through a plurality of openings having a size of 325 to 1300 meshes (JIS screen standards) in Examples 1 to 5, five kinds of triangle filters (trade name, manufactured by Arai Machinery Corporation) having a plurality of minute openings having slit widths of 10, 15, 20, 25 and 30 µm formed in filter members were used as one example of a plurality of openings having a size of 325 to 1300 meshes (JIS screen standards).

Fermented milk having an average particle diameter in the range of 10 to 20 µm and a viscosity of 8000 mPa·s or more, with rich texture upon eating, a smooth texture, a strong thick texture, and a clear-cut flavor, could thus be produced.

### Example 6

Using a spring filter (trade name) manufactured by Nikuni Machinery Industrial Co., Ltd., fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through openings of the filter and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

A plurality of minute openings in slits having a slit width of 20 µm formed in a filter member are formed in the spring filter (trade name, manufactured by Nikuni

Machinery Industrial Co., Ltd.) used in Example 6. This slit width corresponds to 650 meshes (JIS screen standards). That is, the step of breaking the fermented milk curds was carried out by using a filter member having a plurality of openings having a size of 650 meshes (JIS screen standards) formed therein.

The throughput speed (speed of fluidizing the fermented milk curds) was a flow rate of 650 L/h fermented milk curds.

The temperature of the fluidized fermented milk curds was changed with time to become 43 to 35°C.

The average particle diameter of the produced fermented milk was 17.3 µm, and the viscosity was 9200 mPa·s.

Fermented milk having suitably high viscosity, a smooth texture, and a strong thick texture (rich texture upon eating) could be stably obtained by the production process described above.

### Example 7

Using a wedge wire screen (trade name) manufactured by Manabe Kogyo Co., Ltd., fermented milk curds (that is, a milk base (yogurt mix) with a solids content, 24.2%; protein concentration, 7.1 %; fat, 4.7%; sugar 5.0%; a stabilizer, not added) obtained in the same manner as in Example 1 were broken by fluidizing and extruding the fermented milk curds through openings of the filter and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

A plurality of minute openings in slits having a slit width of 20 µm formed in a filter member are formed in the wedge wire screen (trade name, manufactured by Manabe Kogyo Co., Ltd.) used in Example 7. This slit width corresponds to 20 µM (650 meshes) (JIS)

screen standards). That is, the step of breaking the fermented milk curds was carried out by using a filter member having a plurality of opening having a size of 20 µm (650 meshes) (JIS screen standards) formed therein.

The throughput speed (speed of fluidizing the fermented milk curds) was a flow rate of 160 L/h fermented milk curds.

The temperature of the fluidized fermented milk curds was changed with time to become 43 to 35°C.

The average particle diameter of the produced fermented milk was 10.3 µm, and the viscosity was 8300 mPa·s.

Fermented milk having suitably high viscosity, a smooth texture, and a strong thick texture (rich texture upon eating) could be stably obtained by the production process described above.

### Example 8

Fermented milk was produced in the same manner as in Examples 1 to 5 except that in the step of breaking the fermented milk curds, the treatment was carried out by using a nozzle in place of the 4 triangle filters (trade name, manufactured by Arai Machinery Corporation) having a plurality of slits having slit widths of 10, 15, 20, 25 and 30 µm formed in filter members.

The nozzle has a structure for pulverizing a treated fluid by jetting it through a plurality of thin openings at high pressure.

The nozzle diameters were three standards of 400, 600 and 800 µm.

The relationship among the flow rate of the treated fluid through one thin opening of the nozzle, the back pressure, the particle size of the fermented milk produced, and the viscosity is as shown in Table 1.

**Table**

| Nozzle diameter [µm] | Flow rate [L/h] | Back pressure [MPa] | Viscosity [mPa·s] | Particle diameter [µm] |
|---|---|---|---|---|
| 400 | 30 | 2.0 | 8200 | 11.6 |
| 400 | 40 | 3.0 | 8200 | 12.2 |
| 400 | 50 | 4.0 | 8000 | 10.2 |
| 400 | 60 | 6.0 | 7300 | 7.5 |
| 600 | 50 | 2.0 | 8100 | 15.4 |
| 600 | 60 | 3.0 | 8200 | 12.6 |
| 600 | 65 | 4.0 | 7500 | 8.8 |
| 600 | 90 | 6.0 | 7100 | 8.6 |
| 800 | 65 | 1.0 | 6800 | 25.4 |
| 800 | 95 | 2.0 | 8100 | 15.6 |
| 800 | 115 | 3.0 | 8000 | 11.3 |
| 800 | 140 | 4.0 | 7500 | 9.2 |

The temperature of the treated fluid was changed with time to become 43 to 35°C.

As is evident from Table 1, when the nozzle diameter was 400 µm, the fermented milk produced at a back pressure of 2.0 MPa had a particle diameter of 11.6 µm and a viscosity of 8200 mPa·s, and the fermented milk produced at a back pressure of 3.0 MPa had a particle diameter of 12.2 µm and a viscosity of 8200 mPa·s, and the fermented milk produced at a back pressure of 4.0 MPa had a particle diameter of 10.2 µm and a viscosity of 8000 mPa·s, and in any cases, fermented milk having a smooth texture, suitable viscosity and thick texture (rich texture upon eating) could be produced. On the other hand, when the back pressure was 6.0 MPa, the particle diameter was 7.5 µm and the viscosity was 7300 mPa·s, and the viscosity and thick texture (rich texture upon eating) were not satisfactory.

When the nozzle diameter was 600 µm, the fermented milk produced at a back pressure of 2.0 MPa had a particle diameter of 15.4 µm and a viscosity of 8100 mPa·s, and the fermented milk produced at a back pressure of 3.0 MPa had a particle diameter of 12.6 µm and a viscosity of 8200 mPa·s, and in both cases, fermented milk having a smooth texture, suitable viscosity and thick texture (rich texture upon eating) could be produced. However, the fermented milk produced at a back pressure of 4.0 MPa had a particle diameter of 8.8 µm and a viscosity of 7500 mPa·s, and the fermented milk produced at a back pressure of 6.0 MPa had a particle diameter of 8.6 µm and a viscosity of 7100 mPa·s, and the viscosity and thick texture (rich texture upon eating) were not satisfactory

When the nozzle diameter was 800 µm, the fermented milk produced at a back pressure of 2.0 MPa had a particle diameter of 15.6 µm and a viscosity of 8100 mPa·s, and the fermented milk produced at a back pressure of 3.0 MPa had a particle diameter of 11.3 µm and a viscosity of 8000 mPa·s, and in both cases, fermented milk having a smooth texture, suitable viscosity and thick texture (rich texture upon eating) could be produced. On the other hand, the fermented milk produced at a back pressure of 1.0 MPa had a particle diameter of 25.4 µm and a viscosity of 6800 mPa·s, there was gritty texture, and the viscosity and thick texture (rich texture upon eating) were not satisfactory. The fermented milk produced at a back pressure of 4.0 MPa had a particle diameter of 9.2 µm and a viscosity of 7500 mPa·s, and the viscosity and thick texture (rich texture upon eating) were not satisfactory

In this example, it was confirmed that when a nozzle for pulverizing a treated fluid by passing it through thin openings and jetting it at high pressure is used in the step of breaking the fermented milk curds, the fermented milk of the present invention can be produced stably with good reproducibility by using the nozzle having a nozzle diameter in the range of 400 to 800 µm at a back pressure of 2.3 to 3.0 MPa.

### Comparative Example 1

Fermented milk was produced in the same manner as in Examples 1 to 5 except that in the step of breaking the fermented milk curds, the treatment was carried out by using a mesh filter (grating) in place of the five triangle filters (trade name, manufactured by Arai Machinery Corporation) having a plurality of slits having slit widths of 10, 15, 20, 25 and 30 µm formed in filter members.

The mesh filter is also called a grating and has a structure for pulverizing a treated fluid by passing it through latticed gaps arranged at equal intervals.

The mesh diameter was 250 µm (corresponding to 60 meshes in JIS screen standards). The throughput speed was a flow rate of 500 L/h fermented milk curds through an effective area of 480 cm² of the mesh filter.

The temperature of the treated fluid was changed with time to become 43 to 35°C.

The average particle diameter of the fermented milk was 115 µm, and the viscosity was 8200 mPa·s.

The resulting fermented milk had the same viscosity as in Examples 1 to 5, and had a stronger thick texture. However, there were strong gritty texture and powdery texture, and the texture upon eating was not improved.

### Comparative Example 2

Fermented milk was produced in the same manner as in Examples 1 to 5 except that in the step of breaking the fermented milk curds, the treatment was carried out by using an in-line mixer (trade name: "Line Mill", manufactured by TOKUSHUKIKA. co. jp) in place of the five triangle filters (trade name, manufactured by Arai Machinery Corporation) having a plurality of slits having slit widths of 10, 15, 20, 25 and 30 µm formed in filter members.

The in-line mixer is a machine for pulverizing particles by giving shear stress continuously to the particles by rotating a rotating blade in a casing of the machine.

The throughput speed was a flow rate of the treated fluid of 200 L/h fermented milk curds. The temperature of the treated fluid was changed with time to become 43 to 35°C.

The average particle diameter of the fermented milk was 15.0 µm, and the viscosity was 6000 mPa·s. The resulting fermented milk had lower viscosity as in Examples 1 to 4, and had a lower thick texture. The average particle diameter was small, but the curds were broken unevenly, and particles not pulverized remained, and thus there were gritty texture and powdery texture.

### Comparative Example 3

Fermented milk was produced in the same manner as in Examples 1 to 5 except that in the step of breaking the fermented milk curds, the treatment was carried out by using a homogenizer in place of the five triangle filters (trade name, manufactured by Arai Machinery Corporation) having a plurality of slits having slit widths of 10, 15, 20, 25 and 30 µm formed in filter members.

The homogenizer has a structure for pulverizing a treated fluid by passing it through a flow path and jetting it at high pressure.

The homogenizing pressure was three standards of 5, 10 and 15 MPa.

In any cases, the throughput speed was 800 L/h. The temperature of the treated fluid was changed with time to become 43 to 35°C.

The average particle diameter of the fermented milk was 7.0 to 7.2 µm when the homogenization pressure was 5 MPa, 10 MPa or 15 MPa, and the viscosity was 4300 to 5600 mPa·s when the homogenization pressure was 5 MPa, 10 MPa or 15 MPa.

When the homogenization pressure was 10 MPa, the resulting product had softer (smoother) texture than in Examples 1 to 4, but had low viscosity and very low thick texture. Because the shear force was determined by regulation of the pressure, fine control of the particle diameter and stable operation were difficult.

### Comparative Example 4

1800 g powdered skim milk and 750 g sugar were dissolved under stirring in 9850 g water at ordinary temperatures. Thereafter, the mixture was heated to 50°C under stirring, and after heating, 825 g salt-free butter was introduced into it. After dissolution, the mixture was heated to 70°C and a previously prepared gelatin solution (gelatin weight 120 g; water 1200 g) was introduced as a stabilizer to increase viscosity, and then the mixture was sufficiently stirred, mixed and then subjected to a homogenizer. After homogenization, the mixture was heated to 95°C and then cooled to 43°C. Then, 3 wt% of the same mixed starter of Lactobacillus bulgaricus and Streptococcus thermophilus as in Example 1 was inoculated onto the mixture and stirred for 5 minutes. Thereafter, this milk base yogurt mix was fermented in the vicinity of 43°C, and when the pH was reduced to 4.7 or less, the fermentation was finished.

The fermented milk curds thus obtained were broken with a mesh filter (grating) (corresponding to 60 meshes in JIS screen standards) to give fermented milk having a rich texture with the stabilizer (gelatin).

Comparative Example 4 is an example where the stabilizer (gelatin) was used and sugar was added, and the solids content of the milk base yogurt mix was 22.1%, the protein concentration was 4.9%, the fat concentration was 4.7%, and the sugar concentration was 5.0%.

Because the stabilizer was added, the resulting fermented milk had high viscosity and high thick texture, but was sticky and poor in dissolution in the mouth. The average particle diameter was 19.4 µm, and the viscosity was 11000 mPa·s.

### Example 9

### (Step of fermenting a dairy product and a milk protein-containing milk base (yogurt mix))

1350 g powdered skim milk, 500 g MPC and 0 g sugar were dissolved under stirring in 11840 g water at ordinary temperatures. Thereafter, the mixture was heated to 50°C under stirring, and after heating, 860 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43 °C, and when the pH was reduced to 4.7 or less, the fermentation was finished.

The solids content of the milk base yogurt mix was 16.9%, the protein concentration was 6.0%, the fat concentration was 5.0%, and the sugar concentration was 0%. That is, the solids content was lower than 20%, but the protein concentration was 6.0% which was in the range of 5 to 10%.

### (Step of breaking the fermented milk curds)

The fermented milk curds were broken by fluidizing the curds with the same triangle filter as in Example 1, that is, a triangle filter (trade name, manufactured by Arai Machinery Corporation) having a plurality of minute openings in slits having a slit width of 10 µm formed in a filter member.

The throughput speed (flowing rate of the fermented milk curds) was a flow rate of 250 L/h fermented milk curd through an effective area of 210 cm² of the triangle filter.

### (Cooling step)

The fermented milk curds thus milled were gradually cooled by leaving them state or under gentle stirring in a tank or the like without rapid cooling with a heat exchanger. Thereafter, the product was placed in a predetermined frame and cooled in a refrigerator (3 to 5°C, 12 hours), to give stirred yogurt as the fermented milk of the present invention.

As described above, this fermented milk (stirred yogurt) was produced without adding a stabilizer, and no sugar was added to the starting material.

The average particle diameter of this fermented milk (stirred yogurt) was 16.7 µm, and the viscosity was 9000 mPa·s.

The fermented milk (stirred yogurt) thus produced was free of gritty texture upon eating and roughness in outward appearance and had a smooth texture, suitably high viscosity and a strong thick texture (rich texture upon eating).

### Example 10

### (Step of fermenting a dairy product and a milk protein-containing milk base (yogurt mix))

1775 g powdered skim milk, 625 g MPC and 0 g sugar were dissolved under stirring in 11475 g water at ordinary temperatures. Thereafter, the mixture was heated to 50°C under stirring, and after heating, 675 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix was 19.4%, the protein concentration was 7.7%, the fat concentration was 4.0%, and the sugar concentration was 0%. That is, the solids content was lower than 20%, but the protein concentration was 7% which was in the range of 5 to 10%.

Thereafter, the fermented milk (stirred yogurt) of the present invention was obtained in the same manner as in Example 9.

As described above, this fermented milk (stirred yogurt) was produced without adding a stabilizer, and no sugar was added to the starting material.

The average particle diameter of the fermented milk (stirred yogurt) obtained under gradual cooling by leaving them or by gently stirring them in a tank or the like, without rapid cooling with a heat exchanger, was 15.2 µm, and the viscosity was 11200 mPa·s.

The fermented milk (stirred yogurt) thus produced was free of gritty texture upon eating and roughness in outward appearance and had a smooth texture, suitably high viscosity and a strong thick texture (rich texture upon eating).

### Example 11

### (Step of fermenting a dairy product and a milk protein-containing milk base (yogurt mix))

1775 g powdered skim milk, 625 g MPC and 0 g sugar were dissolved under stirring in 11650 g water at ordinary temperatures. Thereafter, the mixture was heated to 50°C under stirring, and after heating, 500 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base (yogurt mix) was fermented in the vicinity of 43°C, and when the pH was reduced to 4.7 or less, the fermentation was finished.

The solids content of the milk base yogurt mix was 18.4%, the protein concentration was 7.7%, the fat concentration was 3.0%, and the sugar concentration was 0%. That is, the solids content was lower than 20%, but the protein concentration was 7.7% which was in the range of 5 to 10%.

Thereafter, the fermented milk (stirred yogurt) of the present invention was obtained in the same manner as in Example 9.

As described above, this fermented milk (stirred yogurt) was produced without adding a stabilizer, and no sugar was added to the starting material.

The average particle diameter of the fermented milk (stirred yogurt) obtained under gradual cooling by leaving them or by gently stirring them in a tank or the like, without rapid cooling with a heat exchanger, was 16.2 µm, and the viscosity was 9200 mPa·s.

The fermented milk (stirred yogurt) thus produced was free of gritty texture upon eating and roughness in outward appearance and had a smooth texture. The fermented milk had viscosity meeting demand as stirred yogurt and thick texture (rich texture upon eating).

### Comparative Example 5

### (Step of fermenting a dairy product and a milk protein-containing milk base (yogurt mix))

1050 g powdered skim milk, 400 g MPC and 150 g sugar were dissolved under stirring in 11250 g water at ordinary temperatures. Thereafter, the mixture was heated to 50°C under stirring, and after heating, 1100 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix was 20.7%, the protein concentration was 4.8%, the fat concentration was 6.3%, and the sugar concentration was 5.0%. That is, the solids content was higher than 20%, while the protein concentration was lower 5%.

Thereafter, the fermented milk (stirred yogurt) of the present invention was obtained in the same manner as in Example 9.

As described above, this fermented milk (stirred yogurt) was produced without adding a stabilizer, and sugar was added to the starting material.

The average particle diameter of the fermented milk (stirred yogurt) obtained under gradual cooling by leaving them or by gently stirring them in a tank or the like, without rapid cooling with a heat exchanger, was 15.3 µm, and the viscosity was 4400 mPa·s.

The fermented milk (stirred yogurt) thus produced was free of gritty texture upon eating and roughness in outward appearance and had a smooth texture, but was poor in viscosity and thick texture (rich texture upon eating).

### Comparative Example 6

### (Step of fermenting a dairy product and a milk protein-containing milk base yogurt mix

975 g powdered skim milk, 350 g MPC and 750 g sugar were dissolved under stirring in 11615 g water at ordinary temperatures. Thereafter, the mixture was heated to 50°C under stirring, and after heating, 860 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix was 18.6%, the protein concentration was 4.3%, the fat concentration was 4.9%, and the sugar concentration was 5.0%. That is, the solids content was lower than 20%, and the protein concentration was lower 5%.

Thereafter, the fermented milk (stirred yogurt) of the present invention was obtained in the same manner as in Example 9.

As described above, this fermented milk (stirred yogurt) was produced without adding a stabilizer, and sugar was added to the starting material.

The average particle diameter of the fermented milk (stirred yogurt) obtained under gradual cooling by leaving them or by gently stirring them in a tank or the like, without rapid cooling with a heat exchanger, was 16.4 µm and the viscosity was 6600 mPa·s.

The fermented milk (stirred yogurt) thus produced was free of gritty texture upon eating and roughness in outward appearance and had a smooth texture, but was poor in viscosity and thick texture (rich texture upon eating).

### Comparative Example 7

### (Step of fermenting a dairy product and a milk protein-containing milk base (yogurt mix))

975 g powdered skim milk, 350 g MPC and 0 g sugar were dissolved under stirring in 12365 g water at ordinary temperatures. Thereafter, the mixture was heated to 50°C under stirring, and after heating, 860 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix was 13.6%, the protein concentration was 4.3%, the fat concentration was 4.9%, and the sugar concentration was 0%. That is, the solids content was lower than 20%, and the protein concentration was lower 5%.

Thereafter, the fermented milk (stirred yogurt) of the present invention was obtained in the same manner as in Example 9.

As described above, this fermented milk (stirred yogurt) was produced without adding a stabilizer, and no sugar was added to the starting material.

The average particle diameter of the fermented milk (stirred yogurt) obtained under gradual cooling by leaving them or by gently stirring them in a tank or the like, without rapid cooling with a heat exchanger, was 17.3 µm, and the viscosity was 5100 mPa·s.

The fermented milk (stirred yogurt) thus produced was free of gritty texture upon eating and roughness in outward appearance and had a smooth texture, but was poor in viscosity and thick texture (rich texture upon eating).

### Example 12

### (Step of fermenting a dairy product and a milk protein-containing milk base (yogurt mix))

1775 g powdered skim milk, 625 g MPC and 750 g sugar were dissolved under stirring in 10540 g water at ordinary temperatures. Thereafter, the mixture was heated to 50°C under stirring, and after heating, 860 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix, was 25.4%, the protein concentration was 7.7%, the fat concentration was 5.0%, and the sugar concentration was 5.0%. That is, the solids content was in the range of 20 to 30%, and the protein concentration was in the range of 5 to 10%.

Thereafter, the fermented milk (stirred yogurt) of the present invention was obtained in the same manner as in Example 9.

As described above, this fermented milk (stirred yogurt) was produced without adding a stabilizer, and sugar was added to the starting material.

The average particle diameter of the fermented milk (stirred yogurt) obtained by gradual cooling was 14.6 µm, and the viscosity was 13750 mPa·s. On the other hand, the viscosity of the fermented milk (stirred yogurt) obtained by rapid cooling was 10200 mPa·s, and the two samples were similar to each other in respect of average particle diameter.

Thus, the fermented milk (stirred yogurt) of the present invention having an average particle diameter of 10 to 20 µm and a viscosity of 8000 mPa·s or more could be produced regardless of whether rapid cooling was conducted or not conducted, but gradual cooling (gradual cooling step) in place of rapid cooling, that is, gradual cooling by leaving them or under gentle stirring in a tank or the like without rapid cooling with a heat exchanger, was recognized to be desirable for production of fermented milk (stirred yogurt) having higher viscosity.

The fermented milk (stirred yogurt) thus produced was free of gritty texture upon eating and roughness in outward appearance and had a smooth texture, suitably high viscosity and a strong thick texture (rich texture upon eating).

### Example 13

### (Step of fermenting a dairy product and a milk protein-containing milk base (yogurt mix))

1350 g powdered skim milk, 500 g MPC and 750 g sugar were dissolved under stirring in 11090 g water at ordinary temperatures. Thereafter, the mixture was heated to 50°C under stirring, and after heating, 860 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix was 21.9%, the protein concentration was 6.0%, the fat concentration was 5.0%, and the sugar concentration was 5.0%. That is, the solids content was in the range of 20 to 30%, and the protein concentration was in the range of 5 to 10%.

Thereafter, the fermented milk (stirred yogurt) of the present invention was obtained in the same manner as in Example 9.

As described above, this fermented milk (stirred yogurt) was produced without adding a stabilizer, and sugar was added to the starting material.

The average particle diameter of the fermented milk (stirred yogurt) obtained under gradual cooling by leaving them or by gently stirring them in a tank or the like, without rapid cooling with a heat exchanger, was 15.8 µm, and the viscosity was 9800 mPa·s.

The fermented milk (stirred yogurt) thus produced was free of gritty texture upon eating and roughness in outward appearance and had a smooth texture, suitably high viscosity and a strong thick texture (rich texture upon eating).

### Example 14

### (Step of fermenting a dairy product and a milk protein-containing milk base yogurt mix

1775 g powdered skim milk, 625 g MPC and 0 g sugar were dissolved under stirring in 11290 g water at ordinary temperatures. Thereafter, the mixture was heated to 50°C under stirring, and after heating, 860 g salt-free butter was introduced into it. After dissolution, the mixture was heated to 70°C and then subjected to a homogenizer. After homogenization, the mixture was heated to 95°C and then cooled to 43°C.

Then, 3 wt% of the same mixed starter as used in Example 1 was inoculated onto the mixture and stirred for 5 minutes.

This milk base yogurt mix was fermented in the vicinity of 43°C, and when the pH was reduced to 4.7 or less, the fermentation was finished.

The solids content of the milk base yogurt mix was 20.4%, the protein concentration was 7.7%, the fat concentration was 5.0%, and the sugar concentration was 0%. That is, the solids content was in the range of 20 to 30%, and the protein concentration was in the range of 5 to 10%.

Thereafter, the fermented milk (stirred yogurt) of the present invention was obtained in the same manner as in Example 9.

As described above, this fermented milk (stirred yogurt) was produced without adding a stabilizer, and no sugar was added to the starting material.

The average particle diameter of the fermented milk (stirred yogurt) obtained by gradual cooling was 15.6 µm, and the viscosity was 14470 mPa·s. On the other hand, the viscosity of the fermented milk (stirred yogurt) obtained by rapid cooling was 8050 mPa·s, and the two samples were similar to each other in respect of average particle diameter.

Thus, the fermented milk (stirred yogurt) of the present invention having an average particle diameter of 10 to 20 µm and a viscosity of 8000 mPa·s or more could be produced regardless of whether rapid cooling was conducted or not conducted, but gradual cooling (gradual cooling step) without rapid cooling, that is, gradual cooling by leaving them or under gentle stirring in a tank or the like without rapid cooling with a heat exchanger, was recognized to be desirable for production of fermented milk (stirred yogurt) having higher viscosity.

The fermented milk (stirred yogurt) thus produced was free of gritty texture upon eating and roughness in outward appearance and had a smooth texture, suitably high viscosity and a strong thick texture (rich texture upon eating).

### [Quality Evaluation Test (Sensory Evaluation)]

Physical properties of the respective products in Examples 1 to 8 and Comparative Examples 1 to 4 are as shown in Table 2. Further, the respective products were examined sensorily in a quality evaluation test (sensory evaluation). The test results are shown in Table 3.

**Table 2. Physical properties of fermented milk**

| | | Particle diameter [µm] Min. to Max. | Viscosity [mPa·s] Min.to Max. |
|---|---|---|---|
| Example 1 | | 11.7 to 16.9 | 9100 to 9500 |
| Example 2 | | 12.6 to 16.7 | 11000 to 11100 |
| Example 3 | | 14.2 to 18.2 | 12400 to 12900 |
| Example 4 | | 13.2 | 17700 |
| Example 5 | | 15.0 to 19.8 | 12900 to 13200 |
| Example 6 | | 17.3 | 9200 |
| Example 7 | | 10.3 | 8300 |
| Example 8 | Nozzle diameter: 400µm | 11.6 to 12.2 | 8200 |
| | Back pressure: 2.0MPa to 3.0MPa | | |
| | Nozzle diameter: 600µm | 12.6 to 15.4 | 8100 to 8200 |
| | Back pressure: 2.0MPa to 3.0MPa | | |
| | Nozzle diameter: 800µm | 11.3 to 15.6 | 8000 to 8100 |
| | Back pressure: 2.0MPa to 3.0MPa | | |
| Comparative | Example 1 | 115 | 8200 |
| Comparative | Example 2 | 15.0 | 6000 |
| Comparative | Example 3 | 7.0 to 7.2 | 4300 to 5600 |
| Comparative | Example 4 | 19.4 | 11000 |

**Table 3. Sensory evaluation of fermented milk**

| | Smoothness | Thick texture | Clear-cut texture | Comprehensive evaluation |
|---|---|---|---|---|
| Example 1 | A | A | A | A |
| Example 2 | A | A | A | A |
| Example 3 | A | A | A | A |
| Example 4 | A | A | A | A |
| Example 5 | A | A | A | A |
| Example 6 | A | A | A | A |
| Example 7 | A | A | A | A |
| Example 8 | A | A | A | A |
| Comparative Example 1 | D | A | C | C |
| Comparative Example 2 | C | B | B | B |
| Comparative Example 3 | A | D | A | B |
| Comparative Example 4 | B | A | D | B |

| | | | | |
|---|---|---|---|---|
| Smoothness: absence of gritty texture upon eating and powdery texture Thick texture: rich and thick texture upon eating Clear-cut texture: absence of sticky texture upon eating and powdery texture Example 1 : 250L/h Example 5 : 3500L/h Example 2 : 550L/h Example 6 : 650L/h Example 3 : 2900L/h Example 7 : 800µm, 2.0MPa Example 4 : 5000L/h Comparative Example 3 : homogenization pressure 10 MPa | | | | |

4-Rank evaluation by a panel of 10 specialists: A (most superior) to D (most inferior). Comprehensive evaluation is the mean in each item. A, point 4; B, point 3; C, point 2; and D, point 1, and the mean was rounded off.

As shown in these results, the fermented milks of the present invention produced by the process of the present invention (Examples 1 to 8) were products having rich texture, excellent texture upon eating and excellent flavor, and their comprehensive evaluation was high. On the other hand, the fermented milks obtained by the processes in the other comparative examples were evaluated to be inferior in some items and thus badly-balanced as a whole, resulting in low comprehensive evaluation.

## Claims

1. Fermented milk having a volume-average particle diameter of 10 to 20 µm and a viscosity measured by rotating Brookfield viscometer TV-10M at 5°C of 8000 mPa·s or more, produced without adding a stabilizer, obtainable by a process including a step of breaking fermented milk curds obtained by fermenting a milk base yogurt mix containing at least one member selected from milk, dairy product and milk protein, and the step of breaking the fermented milk curds involves extruding the fermented milk curds using a milk base yogurt mix having a protein concentration of 5 to 10% through a plurality of openings having a size of 44 to 10 µm (325 to 1300 meshes (JIS screen standards)).

2. Fermented milk having a volume-average particle diameter of 10 to 20 µm and a viscosity measured by rotating Brookfield viscometer TV-10M at 5°C of 8000 mPa·s or more, produced without adding a stabilizer, obtainable by a process including a step of breaking fermented milk curds obtained by fermenting a milk base yogurt mix containing at least one member selected from milk, dairy product and milk protein, said step of breaking the fermented milk curds involves jetting the fermented milk curds using a milk base yogurt mix having a protein concentration of 5 to 10% through thin openings having a nozzle diameter of 400 to 800 µm at a back pressure of 2.0 to 3.0 MPa.

3. The fermented milk according to claim 1 or 2 wherein the solids content of the milk base yogurt mix is 20 to 30%.

4. The fermented milk according to claim 1, wherein a plurality of the openings having a size of 44 to 10 µm (325 to 1300 meshes (JIS screen standards)) are formed into a plurality of slits having a slit width of 10 to 40 µm formed in a filter member.

5. A process for producing fermented milk according to claim 1, comprising a step of breaking fermented milk curds obtained by fermenting a milk base yogurt mix containing at least one member selected from milk, dairy product and milk protein, wherein the step of breaking the fermented milk curds involves extruding the fermented milk curds using a milk base yogurt mix having a protein concentration of 5 to 10% through a plurality of openings having a size of 44 to 10 µm (325 to 1300 meshes (JIS screen standards)).

6. A process for producing fermented milk according to claim 2, comprising a step of breaking fermented milk curds obtained by fermenting a milk base yogurt mix containing at least one member selected from milk, dairy product and milk protein, wherein the step of breaking the fermented milk curds involves jetting the fermented milk curds using a milk base yogurt mix having a protein concentration of 5 to 10% through thin openings having a nozzle diameter of 400 to 800 µm at a back pressure of 2.0 to 3.0 MPa.

7. The process for producing fermented milk according to claim 5 or 6, wherein the solids content of the milk base yogurt mix is 20 to 30%.

8. The process for producing fermented milk according to claim 5, wherein a plurality of the openings having a size of 44 to 10 µm (325 to 1300 meshes (JIS screen standards)) are formed into a plurality of slits having a slit width of 10 to 40 µm formed in a filter member.

## Patentansprüche

1. Fermentierte Milch mit einem mittleren Partikeldurchmesser von 10 bis 20 µm und einer mittels eines TV-10M Brookfield-Rotationsviskosimeter gemessenen Viskosität von 8000 mPa.s oder mehr bei 5°C, die ohne Zugabe von Stabilisatoren produziert wurde, die durch ein Verfahren erhalten werden kann, das einen Schritt des Brechens der fermentierten Sauermilch enthält, die durch Fermentierung eines Joghurtgemischs auf Milchbasis erhalten wird, das mindestens ein unter Milch, Milchprodukt und Milchprotein gewähltes Mitglied enthält, wobei der Schritt des Brechens der fermentierten Sauermilch die Extrusion der fermentierten Sauermilch einbegreift unter Verwendung eines Joghurtgemischs auf Milchbasis mit einer Proteinkonzentration von 5 bis 10 % durch eine Vielzahl von Öffnungen mit einer Größe von 44 bis 10 µm (325 bis 1300 mesh (JIP Siebstandard - "JIS screen standards" )).

2. Fermentierte Milch mit einem mittleren Partikeldurchmesser von 10 bis 20 µm und einer mittels eines TV-10M Brookfield-Rotationsviskosimeter gemessenen Viskosität von 8000 mPa.s oder mehr bei 5°C, die ohne Zugabe von Stabilisatoren produziert wurde, die durch ein Verfahren erhalten werden kann, das einen Schritt des Brechens der fermentierten Sauermilch enthält, die durch Fermentierung eines Joghurtgemischs auf Milchbasis erhalten wird, das mindestens ein unter Milch, Milchprodukt und Milchprotein gewähltes Mitglied enthält, wobei der besagte Schritt des Brechens der fermentierten Sauermilch die Strahlung der Sauermilch einbegreift unter Verwendung eines Joghurtgemischs auf Milchbasis mit einer Proteinkonzentration von 5 bis 10 % durch enge Öffnungen mit einer Düsendurchmesser von 400 bis 800 µm bei einem Gegendruck von 2,0 bis 3,0 MPa.

3. Fermentierte Milch gemäß Anspruch 1 oder 2, wobei der Feststoffgehalt des Joghurtgemischs auf Milchbasis zwischen 20 und 30% liegt.

4. Fermentierte Milch gemäß Anspruch 1, wobei eine Vielzahl von Öffnungen mit einer Größe von 44 bis 10 µm (325 bis 1300 mesh (JIP Siebstandard - "JIS screen standards")) in Form einer Vielzahl von Schlitzen mit einer Schlitzbreite von 10 bis 40 µm im Membranfilter gebildet werden.

5. Verfahren zur Herstellung fermentierter Milch gemäß Anspruch 1, das einen Schritt des Brechens fermentierter Sauermilch enthält, die durch Fermentierung eines Joghurtgemischs auf Milchbasis erhalten wird, das mindestens ein unter Milch, Milchprodukt und Milchprotein gewähltes Mitglied enthält, wobei der Schritt des Brechens der fermentierten Sauermilch die Extrusion der fermentierten Sauermilch einbegreift unter Verwendung eines Joghurtgemischs auf Milchbasis mit einer Proteinkonzentration von 5 bis 10 % durch eine Vielzahl von Öffnungen mit einer Größe von 44 bis 10 µm (325 bis 1300 mesh (JIP Siebstandard - "JIS screen standards" )).

6. Verfahren zur Herstellung fermentierter Milch gemäß Anspruch 2, das einen Schritt des Brechens fermentierter Sauermilch enthält, die durch Fermentierung eines Joghurtgemischs auf Milchbasis erhalten wird, das mindestens ein unter Milch, Milchprodukt und Milchprotein gewähltes Mitglied enthält, wobei der Schritt des Brechens der fermentierten Sauermilch die Strahlung der Sauermilch einbegreift unter Verwendung eines Joghurtgemischs auf Milchbasis mit einer Proteinkonzentration von 5 bis 10 % durch enge Öffnungen mit einem Düsendurchmesser von 400 bis 800 µm bei einem Gegendruck von 2,0 bis 3,0 MPa.

7. Verfahren zur Herstellung fermentierter Milch gemäß Anspruch 5 oder 6, wobei der Feststoffgehalt des Joghurtgemischs auf Milchbasis zwischen 20 und 30% liegt.

8. Verfahren zur Herstellung fermentierter Milch gemäß Anspruch 5, wobei eine Vielzahl von Öffnungen mit einer Größe von 44 bis 10 µm (325 bis 1300 mesh (JIP Siebstandard - "JIS screen standards")) in Form einer Vielzahl von Schlitzen mit einer Schlitzbreite von 10 bis 40 µm im Membranfilter gebildet werden.

## Revendications

1. Lait fermenté ayant un diamètre de particule moyen de 10 à 20 µm et une viscosité mesurée par un viscosimètre rotatif Brookfield TV-10M à 5°C de 8000 mPa.s ou plus, produit sans ajout de stabilisant, susceptible d'être obtenu par un procédé incluant une étape de broyage de lait caillé fermenté obtenu en fermentant un mélange de yaourt à base de lait contenant au moins un membre choisi parmi le lait, un produit laitier et une protéine du lait, et l'étape de broyage de lait caillé fermenté implique une extrusion du lait caillé en utilisant un mélange de yaourt à base de lait ayant une concentration en protéine de 5 à 10% à travers une pluralité d'ouverture ayant une taille de 44 à 10 µm (325 à 1300 mesh (tamis standards JIS (« JIS screen standards »))).

2. Lait fermenté ayant un diamètre de particule moyen de 10 à 20 µm and une viscosité mesurée par un viscosimètre rotatif Brookfield TV-10M à 5°C de 8000 mPa.s ou plus, produit sans ajout de stabilisant, susceptible d'être obtenu par un procédé incluant une étape de broyage de lait caillé fermenté obtenu en fermentant un mélange de yaourt à base de lait contenant au moins un membre choisi parmi le lait, un produit laitier et une protéine du lait, ladite étape de broyage de lait caillé fermenté implique une éjection du lait caillé en utilisant un mélange de yaourt à base de lait ayant une concentration en protéine de 5 à 10% à travers des ouvertures étroites ayant un diamètre de buse de 400 à 800 µm à une contre pression de 2,0 à 3,0 MPa.

3. Lait fermenté selon la revendication 1 ou 2 dans lequel le contenu de solides du mélange de yaourt à base de lait est de 20 à 30%.

4. Lait fermenté selon la revendication 1, dans lequel une pluralité d'ouvertures ayant une taille de 44 à 10 µm (325 à 1300 mesh (tamis standards JIS (« JIS screen standards »)) est formée d'une pluralité de fentes ayant une largeur de fente de 10 à 40 µm formé dans un filtre membrane.

5. Un procédé pour la production de lait fermenté selon la revendication 1, comprenant une étape de broyage de lait caillé fermenté obtenu en fermentant un mélange de yaourt à base de lait contenant au moins un membre choisi parmi le lait, un produit laitier et une protéine du lait, dans lequel l'étape de broyage de lait caillé fermenté implique une extrusion du lait caillé en utilisant un mélange de yaourt à base de lait ayant une concentration en protéine de 5 à 10% à travers une pluralité d'ouverture ayant une taille de 44 à 10 µm (325 à 1300 (tamis standards JIS (« JIS screen standards »))).

6. Un procédé pour la production de lait fermenté selon la revendication 2, comprenant une étape de broyage de lait caillé fermenté obtenu en fermentant un mélange de yaourt à base de lait contenant au moins un membre choisi parmi le lait, un produit laitier et une protéine du lait, dans lequel l'étape de broyage de lait caillé fermenté implique une éjection du lait caillé en utilisant un mélange de yaourt à base de lait ayant une concentration en protéine de 5 à 10% à travers des ouvertures étroites ayant un diamètre de buse de 400 à 800 µm à une contre pression de 2,0 à 3,0 MPa

7. Le procédé selon la revendication 5 ou 6 dans lequel le contenu de solides du mélange de yaourt à base de lait est de 20 à 30%.

8. Le procédé selon la revendication 5, dans lequel une pluralité d'ouvertures ayant une taille de 44 à 10 µm (325 à 1300 mesh (tamis standards JIS (« JIS screen standards »))) est formée d'une pluralité de fentes ayant une largeur de fente de 10 à 40 µm formé dans un filtre membrane.
